(19)

Europäisches
Patentamt
European
Patent Office
Office européen
des brevets

(11) **EP 4 489 123 A1**

(12) **EUROPEAN PATENT APPLICATION**
published in accordance with Art. 153(4) EPC

(43) Date of publication:
**08.01.2025  Bulletin 2025/02**

(51) International Patent Classification (IPC):
***H01M 4/52*** (2010.01)

(21) Application number: **23822766.4**

(52) Cooperative Patent Classification (CPC):
**Y02E 60/10**

(22) Date of filing: **14.04.2023**

(86) International application number:
**PCT/CN2023/088329**

(87) International publication number:
**WO 2023/241195 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **17.06.2022  CN 202210683498**

(71) Applicant: **Ningde Amperex Technology Limited
Ningde, Fujian 352100 (CN)**

(72) Inventors:
- **PENG, Gang
  Ningde, Fujian 352100 (CN)**
- **LANG, Ye
  Ningde, Fujian 352100 (CN)**
- **LIU, Wenyuan
  Ningde, Fujian 352100 (CN)**

(74) Representative: **Icosa
83 avenue Denfert-Rochereau
75014 Paris (FR)**

(54) **POSITIVE ELECTRODE MATERIAL, ELECTROCHEMICAL APPARATUS COMPRISING SAME, AND ELECTRONIC APPARATUS**

(57)    A positive electrode material, including: a matrix and a first coating layer located on surface of the matrix, where based a molar content of metal elements other than Li in the first coating layer, a molar percentage of element Co in the first coating layer is W1; and based on a molar content of metal elements other than Li in the matrix, a molar percentage of element Co in the matrix is W2, where W1 > W2; and the first coating layer includes a first region having a spinel phase structure.

FIG. 3

**EP 4 489 123 A1**

Processed by Luminess, 75001 PARIS (FR)

**Description**

**TECHNICAL FIELD**

This application relates to the field of energy storage, and specifically to a positive electrode material, and an electrochemical apparatus and electronic apparatus containing the positive electrode material.

**BACKGROUND**

In recent years, with the rapid development of electric tool and unmanned aerial vehicle equipment markets, higher requirements have been constantly imposed on the performance of power type lithium-ion batteries, such as power density, low-temperature performance, temperature rise under high-rate discharge and high-temperature cycle life. In addition, how to achieve all the above-mentioned performance is a key issue that needs to be urgently addressed in the industry at present.

Research has shown that the key to improving the power density of lithium-ion batteries, the low-temperature performance of lithium-ion batteries, and the temperature rise under high-rate discharge of lithium-ion batteries is to reduce the internal resistance (including ohmic impedance, electrochemical polarization impedance, and concentration polarization impedance) of the batteries and improve the kinetic performance of the chemical system. From the perspective of positive electrode materials, the most effective measures for improving the kinetic performance are to reduce the size of primary or secondary grains of material particles, increase the specific surface area of the materials, and reduce solid phase diffusion and charge transfer impedance. However, the above measures seriously shorten the high-temperature cycle life of the materials under high voltage while improving the kinetic performance, resulting in a lower upper limit voltage and a lower energy density. Effective measures for improving the cycle life of positive electrode materials under high voltage include increasing the primary grain size of material particles and reducing the specific surface area, bulk and surface doping, and surface metal oxide coating of the materials. However, these measures degrade the kinetic performance of the materials and reduce the initial charge and discharge efficiency and reversible discharge capacity of the materials. Therefore, it is difficult to improve both the kinetic performance and the high-temperature cycle life in the prior art.

**SUMMARY**

This application provides a positive electrode material, in an attempt to resolve at least one problem in the related art. For example, an objective of this application is to guarantee the low-temperature performance of the positive electrode material while prolonging the high-temperature cycle life of the positive electrode material under high voltage. The positive electrode material provided in this application can increase a low-temperature valley voltage of lithium-ion batteries during use under low temperature, reduce temperature rise during high-rate discharge, and improve the high-temperature cycle life under high-rate discharge.

According to an aspect of this application, this application provides a positive electrode material. The positive electrode material includes: a matrix and a first coating layer located on surface of the matrix, where based on a molar content of metal elements other than Li in the first coating layer, a molar percentage of element Co in the first coating layer is W1, and based on a molar content of metal elements other than Li in the matrix, a molar percentage of element Co in the matrix is W2, satisfying: W1 > W2; and the first coating layer includes a first region having a spinel phase structure.

In some embodiments, the first coating layer further includes a second region having a rock-salt phase structure.

On the one hand, the first coating layer on the surface of the matrix is a Co-rich layer. With the Co-rich doped first coating layer, lithium ion conductivity can be increased, interface charge transfer impedance of the material can be reduced, the low-temperature performance of the material can be improved, and temperature rise under high-rate discharge can be reduced. In addition, the first coating layer on the surface of the matrix being rich in Co can also reduce residual lithium impurities on the surface of the material and improve the high-temperature cycling stability of the material. On the other hand, the first coating layer on surface of the matrix of the positive electrode material having both a spinel phase structure and a rock-salt phase structure can further improve the surface stability of the material, thereby further improving the high-temperature cycling stability of the material under high voltage.

In some embodiments, the first region is located between the matrix and the second region. In this case, the relatively more stable second region having the rock-salt phase structure is located on an outer side, further improving the surface stability of the positive electrode material and thereby further improving the high-temperature cycling stability of the positive electrode material under high voltage.

In some embodiments, W1 > 1.5W2. In some embodiments, W1 ranges from 8% to 48%. In this case, the positive electrode material has relatively low interface charge transfer impedance, thereby improving the low-temperature performance of the material. In some embodiments, W1 ≥ 4W2. In some embodiments, W1 ranges from 15% to 40%.

In some embodiments, $W1 \leq 10W2$.

In some embodiments, the first coating layer has a thickness ranging from 3 nm to 40 nm. In some embodiments, the first coating layer has a thickness ranging from 8 nm to 20 nm.

In some embodiments, the first region has a thickness ranging from 1 nm to 5 nm.

In some embodiments, the second region has a thickness ranging from 1 nm to 5 nm.

In some embodiments, the matrix and the first coating layer each independently contain element A selected from at least one of Al, Ti, Y, V, Nb, W, Zr, La, Mg, Cr, Ge, Mo, Sr, Ca, Ba, Fe, Cu, Zn, Ga, In, Sn, Sb, Ce, Ta, Hf, or Sb; based on the molar content of metal elements other than Li in the first coating layer, a molar percentage of element A in the first coating layer is T1; and based on the molar content of metal elements other than Li in the matrix, a molar percentage of element A in the matrix is T2, satisfying: $T1 > T2$. With the element A-rich doped first coating layer, interface stability can be enhanced, and element A-O has larger bond energy than Ni-O, Co-O, and Mn-O. The first coating layer being doped with element A can improve structural stability of the surface of the positive electrode material at high delithiated state and reduce activity of dicoordination oxygen of the surface at high delithiated state, thereby inhibiting irreversible phase transition and oxygen release on the surface of the positive electrode material under high voltage and improving the high-temperature cycling stability of the positive electrode material under high voltage.

In some embodiments, $T1 > 1.3T2$. In some embodiments, $T1 \leq 10T2$. In some embodiments, T1 ranges from 1.5% to 15%.

In some embodiments, the positive electrode material further includes a second coating layer located on surface of the first coating layer, where the second coating layer contains element X, and element X is selected from at least one of F, B, P, or Si.

In some embodiments, the second coating layer has a porous structure. The porous structure facilitates diffusion of lithium ions, thereby improving the kinetic performance of the positive electrode material.

In some embodiments, the second coating layer includes at least one of lithium fluoride, lithium phosphate, lithium borate, or lithium silicate.

In some embodiments, based on a molar content of elements other than Li in the second coating layer, a molar percentage of element X in the second coating layer ranges from 0.1% to 10%.

In some embodiments, the matrix includes a lithium-nickel composite oxide having a layered crystal structure.

In some embodiments, the matrix contains element Ni, where a molar percentage of element Ni in the matrix is greater than or equal to 50% based on the molar content of metal elements other than Li in the matrix.

In some embodiments, the matrix contains element Co, where a molar percentage of element Co in the matrix is greater than or equal to 2% based on the molar content of metal elements other than Li in the matrix.

According to another aspect, this application provides an electrochemical apparatus including the positive electrode material according to this application.

This application further provides an electronic apparatus including the electrochemical apparatus according to this application.

Additional aspects and advantages of this application are partially described and presented in subsequent descriptions, or explained by implementation of some embodiments of this application.

## BRIEF DESCRIPTION OF DRAWINGS

The following briefly describes the accompanying drawings required for describing some embodiments of this application. Apparently, the accompanying drawings described below are merely some embodiments of this application. Persons skilled in the art may still derive drawings for other embodiments from structures shown in these accompanying drawings.

FIG. 1 shows a scanning transmission electron microscope (STEM) image and an EDS mapping image of a positive electrode material according to Example 11 of this application.

FIG. 2 shows a second coating layer containing non-metal elements in the positive electrode material according to Example 11 of this application.

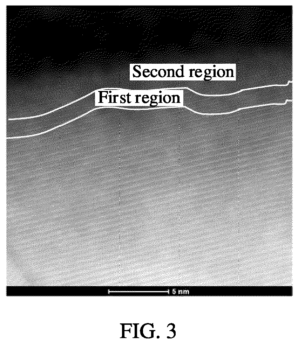

FIG. 3 shows a crystal phase structure of a first coating layer in the positive electrode material according to Example 11 of this application.

## DESCRIPTION OF EMBODIMENTS

Embodiments of this application are described in detail below. Some embodiments of this application should not be construed as limitations on this application.

In specific embodiments and claims, a list of items preceded by the term "at least one of" may mean any combination of the listed items. For example, if items A and B are listed, the phrase "at least one of A or B" means only A, only B, or A and B. In another example, if items A, B, and C are listed, the phrase "at least one of A, B, or C" means only A, only B, or only C; A and B (exclusive of C); A and C (exclusive of B); B and C (exclusive of A); or all of A, B, and C. The item A may include a single element or a plurality of elements. The item B may include a single element or a plurality of elements. The item C may include a single element or a plurality of elements. The term "at least one of" has same meaning as the term "at least one type of".

## 1. **Positive electrode material**

Matrix and first coating layer

This application provides a positive electrode material. The positive electrode material includes: a matrix and a first coating layer located on surface of the matrix, where based on a molar content of metal elements other than Li in the first coating layer, a molar percentage of element Co in the first coating layer is W1, and based on a molar content of metal elements other than Li in the matrix, a molar percentage of element Co in the matrix is W2, satisfying: W1>W2; and the first coating layer includes a first region having a spinel phase structure.

In some embodiments, the first coating layer further includes a second region having a rock-salt phase structure.

In this application, on the one hand, the first coating layer on the surface of the matrix is a Co-rich layer. With the Co-rich doped first coating layer, conductivity of lithium ions can be increased, interface charge transfer impedance of the material can be reduced, low-temperature performance of the material can be improved, and temperature rise under high-rate discharge can be reduced. In addition, the first coating layer on the surface of the matrix being rich in Co can also reduce residual lithium impurities on the surface of the material and improve the high-temperature cycling stability of the material. On the other hand, the first coating layer on surface of the matrix of the positive electrode material having both a spinel phase structure and a rock-salt phase structure can further improve the surface stability of the material, thereby further improving the high-temperature cycling stability of the material under high voltage.

In some embodiments, the first region (the spinel phase structure) of the positive electrode material is located between the matrix and the second region (rock-salt phase structure). In this case, the relatively more stable second region having the rock-salt phase structure is located on an outer side, further improving the surface stability of the positive electrode material, thereby further improving the high-temperature cycling stability of the positive electrode material under high voltage.

In some embodiments, W1 > 1.5W2 (for example, W1 > 2W2, W1 > 3W2, or W1 ≥ 4W2). In some embodiments, W1 ≤ 10W2.

In some embodiments, W1 ranges from 8% to 48%. In this case, the positive electrode material has relatively low interface charge transfer impedance, thereby improving the low-temperature performance of the material. In some embodiments, W1 is 8%, 9%, 10%, 15%, 30%, 36%, 40%, 42%, or 48%, or falls within a range between any two of these values. In some embodiments, W1 ranges from 15% to 40%.

In some embodiments, the first coating layer has a thickness ranging from 3 nm to 40 nm. In some embodiments, the thickness of the first coating layer may be 3 nm, 5 nm, 7 nm, 8 nm, 10 nm, 15 nm, 20 nm, 30 nm, or 40 nm, or falls within a range between any two of these values. In some embodiments, the first coating layer has a thickness ranging from 8 nm to 20 nm.

In some embodiments, the first region has a thickness ranging from 1 nm to 5 nm. In some embodiments, the thickness of the first region may be 1 nm, 2 nm, 3 nm, 4 nm, or 5 nm, or falls within a range between any two of these values.

In some embodiments, the second region has a thickness ranging from 1 nm to 5 nm. In some embodiments, the thickness of the second region may be 1 nm, 2 nm, 3 nm, 4 nm, or 5 nm, or falls within a range between any two of these values.

In some embodiments, the matrix and the first coating layer of the positive electrode material each independently contain element A selected from at least one of Al, Ti, Y, V, Nb, W, Zr, La, Mg, Cr, Ge, Mo, Sr, Ca, Ba, Fe, Cu, Zn, Ga, In, Sn, Sb, Ce, Ta, Hf, or Sb; based on the molar content of metal elements other than Li in the first coating layer, a molar percentage of element A in the first coating layer is T1; and based on the molar content of metal elements other than Li in the matrix, a molar percentage of element A in the matrix is T2, where T1 > T2. With the element A-rich doped first coating layer, interface stability can be enhanced, and element A-O has larger bond energy than Ni-O, Co-O and Mn-O. The first coating layer being doped with element A can improve structural stability of the surface of the material at high delithiated state and reduce activity of dicoordination oxygen of the surface at high delithiated state, thereby inhibiting irreversible phase transition and oxygen release on the surface of the positive electrode material under high voltage and improving the high-temperature cycling stability of the positive electrode material under high voltage.

In some embodiments, the first coating layer of the positive electrode material may further contain at least one of element Ni or element Mn.

In some embodiments, T1 > 1.5T2 (for example, T1 > 3T2 or T1 > 4T2). In some embodiments, T1 ≤ 10T2.

In some embodiments, T1 ranges from 1.5% to 15%. In some embodiments, T1 is 1.5%, 3.0%, 4.5%, 5%, 9%, 12%, or 15%, or falls within a range between any two of these values.

In some embodiments, the first coating layer of the positive electrode material is also rich in element A, where element A is selected from at least one of Al, Ti, Y, V, Nb, W, Zr, La, Mg, Cr, Ge, Mo, Sr, Ca, Ba, Fe, Cu, Zn, Ga, In, Sn, Sb, Ce, Ta, Hf, or Sb.

In some embodiments, the matrix includes a lithium-nickel composite oxide having a layered crystal structure.

In some embodiments, the matrix contains element Ni, where a molar percentage of element Ni in the matrix is greater than or equal to 50% (for example, 55%, 60%, 65%, 70%, 80%, or 90%) based on the molar content of metal elements other than Li in the matrix.

In some embodiments, the matrix contains element Co, where a molar percentage of element Co in the matrix is greater than or equal to 2% (for example, 3%, 4%, 5%, 10%, 12%, or 20%) based on the molar content of metal elements other than Li in the matrix.

Second coating layer

In some embodiments, the positive electrode material further includes a second coating layer located on surface of the first coating layer, where the second coating layer contains element X, and element X is selected from at least one of F, B, P, or Si. In some embodiments, element X in the second coating layer is F. In some embodiments, element X in the second coating layer is Si. In some embodiments, element X in the second coating layer is B. In some embodiments, element X in the second coating layer is P.

In this application, the second coating layer is mainly used to further enhance interface stability between the positive electrode material and an electrolyte, reduce interface side reactions, and improve the high-temperature cycling stability.

In some embodiments, the second coating layer has a porous structure, where the porous structure facilitates diffusion of lithium ions, thereby improving the kinetic performance of the positive electrode material.

In some embodiments, the second coating layer includes at least one of lithium fluoride, lithium phosphate, lithium borate, or lithium silicate.

In some embodiments, based on a molar content of elements other than Li in the second coating layer, a molar percentage of element X in the second coating layer ranges from 0.1% to 10%. With the percentage of element X within the foregoing range, both good low-temperature performance and good high-temperature cycling stability can be achieved. In some embodiments, a molar percentage of element X in the second coating layer is 0.1%, 0.15%, 0.2%, 0.5%, 1%, 5%, 7%, 9%, or 10%, or falls within a range between any two of these values.

## 2. Preparation method of positive electrode material

This application further provides a method for preparing the foregoing positive electrode material. The method includes the following steps: (1) providing a precursor substance; (2) performing primary mixing: mixing a lithium source, the precursor substance, and an optional doping element A at a specified ratio; (3) performing primary sintering: performing primary sintering on a mixture obtained in the step (2) to obtain a primary sintered material; (4) performing crushing and classification: crushing and classifying the primary sintered material; (5) performing secondary sintering: mixing the material obtained in the step (4) with a coating additive, performing secondary sintering, and then cooling to obtain a secondary sintered material with a first coating layer and an optional second coating layer on surface; and (6) performing crushing and classification.

In some embodiments, the step (1) includes: proportioning a nickel source (for example, nickel sulfate or nickel chloride), a cobalt source (for example, cobalt sulfate or cobalt chloride), and a manganese source (for example, manganese sulfate or manganese chloride) according to a molar ratio of Ni/Co/Mn to prepare a salt mixture solution with a specified molar concentration, an alkaline solution with a specified molar concentration (for example, a sodium hydroxide solution), and a complexing agent with a specified concentration (for example, ammonia water). The above-mentioned solutions are filtered to remove solid impurities. The filtered salt solution, alkaline solution, and complexing agent are added to a reactor at a specified flow velocity; the stirring velocity of the reactor as well as the temperature and PH of a reactive slurry are controlled so that salt and alkali experience a neutral reaction to generate a ternary precursor crystal nucleus growing gradually; and after the particle size reaches a predetermined value, the reactive slurry is filtered, washed, and dried to obtain a ternary precursor. When a doped ternary precursor needs to be prepared, a doping element solution is added to the reactor during reaction, and after the reaction, the doped ternary precursor can be obtained.

In some embodiments, the precursor is a doped hydroxide precursor.

In some embodiments, the step (2) includes: mixing and putting a lithium source, the precursor, and an optional doping element A source at a specified molar ratio of Li/M (M = element Ni, Co, Mn, and A) into a high-speed mixer for mixing to uniformity at a high speed, and adding a resulting mixed material to a saggar for a subsequent primary sintering process.

In some embodiments, the molar ratio of Li/M ranges from 1.03 to 1.08.

In some embodiments, the doping element A is selected from at least one of Al, Ti, Y, V, Nb, W, Zr, La, Mg, Cr, Ge, Mo, Sr, Ca, Ba, Fe, Cu, Zn, Ga, In, Sn, Sb, Ce, Ta, Hf, or Sb, where element A is for doping in bulk phase. In some embodiments, the doping element A is Al or Ti.

In some embodiments, the step (3) includes: placing the material mixed to uniformity and put into the saggar in the step (2) into a furnace, first heating up in an oxygen or air atmosphere to a primary sintering temperature at a specified heating rate for pre-sintering, and then calcining the material in the oxygen or air atmosphere at the primary sintering temperature for 12 h to 18 h to obtain a primary sintered material.

In some embodiments, the sintering atmospheres in the step (3) are both oxygen atmosphere. In some embodiments, the sintering temperature ranges from 780°C to 1000°C, for example, 790°C, 800°C, 850°C, 900°C, or 950°C.

In some embodiments, the step (4) includes mechanical crushing and fluid-energy milling, where the primary sintered material obtained in the step (3) is cooled, then mechanically crushed, fluid-energy milled, and classified.

In some embodiments, the step (5) includes: mixing the primary sintered material milled and classified in the step (4) with a coating additive at a specified mass ratio, then mixed to uniformity in the high-speed mixer, putting a resulting mixture of a specified mass into the saggar, placing the saggar into the furnace, calcining the saggar in the oxygen or air atmosphere for 6 h to 10 h, introducing air with $CO_2$ removed to quickly cool the material at a cooling rate of 20 °C/min to 40 °C/min, and performing mechanical pulverization, classification, demagnetization, sieving, and packaging to obtain a positive electrode material.

In some embodiments, the coating additive contains both a Co source and a doping element A source.

In some embodiments, the coating additive further contains an element X (F, B, P, or Si) source.

In some embodiments, the Co source is selected from $Co_3O_4$ or $Co(OH)_2$. In some embodiments, the doping element A source is selected from at least one of $Al_2O_3$, $TiO_2$, $ZrO_2$, $Y_2O_3$, or $WO_3$.

In some embodiments, the element X source is selected from at least one of LiF, $AlF_3$, $Li_3PO_4$, $Li_2SiO_3$, or $Li_3BO_3$.

Thicknesses of the first coating layer and the second coating layer are regulated by controlling a secondary sintering temperature and content of the coating additive. In some embodiments, the secondary sintering temperature ranges from 500°C to 750°C, for example, 550°C, 600°C, 650°C, or 700°C.

Cooling atmosphere conditions and cooling rate after secondary sintering are controlled to regulate surface layer phase composition, so that rock-salt phase and spinel phase exist on surface layer of the material.

## 3. Electrochemical apparatus and electronic apparatus

This application further provides an electrochemical apparatus including the positive electrode material according to this application.

The electrochemical apparatus in this application may include any apparatus in which electrochemical reactions take place. Specific examples of the apparatus include all types of primary batteries or secondary batteries. Especially, the electrochemical apparatus is a lithium secondary battery, including a lithium metal secondary battery, a lithium-ion secondary battery, a lithium polymer secondary battery, or a lithium-ion polymer secondary battery. In some embodiments, the electrochemical apparatus in this application includes a positive electrode plate, a negative electrode plate, a separator disposed between the positive electrode plate and the negative electrode plate, and an electrolyte.

In some embodiments, the positive electrode plate includes a current collector and a positive electrode active substance layer provided on the current collector, where the positive electrode active substance layer includes a positive electrode active material, a binder, and a conductive agent.

In some embodiments, the positive electrode active material includes the positive electrode material according to this application.

In some embodiments, the binder in the positive electrode active material layer includes at least one of fluorine-containing resin, polypropylene resin, a fibrous binder, a rubber binder, or a polyimide binder. In some embodiments, the binder in the positive electrode active material layer includes polyvinylidene fluoride.

In some embodiments, the conductive agent in the positive electrode active material layer includes at least one of conductive carbon black, carbon fibers, acetylene black, Ketjen black, graphene, or carbon nanotubes. In some embodiments, the conductive agent in the positive electrode active material layer includes conductive carbon black and carbon nanotubes.

In some embodiments, a weight percentage of the positive electrode active material is 90 wt% to 98 wt% based on a total weight of the positive electrode active material layer. In some embodiments, a weight percentage of the binder is 0.5 wt% to 5 wt% based on a total weight of the positive electrode active material layer. In some embodiments, a weight percentage of the conductive agent is 0.5 wt% to 5 wt% based on a total weight of the positive electrode active material layer.

In some embodiments, the negative electrode includes a negative electrode current collector and a negative electrode active material layer disposed on the negative electrode current collector.

The negative electrode active material includes a material for reversibly intercalating/deintercalating lithium ions. In some embodiments, the material for reversibly intercalating/deintercalating lithium ions includes a carbon material. In some embodiments, the carbon material may be any carbon-based negative electrode active material commonly used in a lithium-ion chargeable battery. In some embodiments, the carbon material includes but is not limited to crystalline carbon, amorphous carbon, or a mixture thereof. The crystalline carbon may be amorphous, plate-shaped, flake-shaped, spherical or fiber-shaped natural graphite or artificial graphite. The amorphous carbon may be soft carbon, hard carbon, mesophase asphalt carbide, calcined coke, or the like. In some embodiments, the negative electrode material includes but is not limited to graphite, mesophase carbon microbeads (MCMB), hard carbon, soft carbon, silicon, silicon oxide ($SiO_x$), a silicon-carbon compound, or any combination thereof.

In some embodiments, the negative electrode may further include a binder. The binder enhances the bonding between negative electrode active material particles and the bonding between the negative electrode active material and the negative electrode current collector. In some embodiments, the binder includes but is not limited to polyvinyl alcohol, carboxymethyl cellulose, hydroxypropyl cellulose, diacetyl cellulose, polyvinyl chloride, carboxylated polyvinyl chloride, ethylene oxide containing polymer, polyvinylpyrrolidone, polyurethane, polytetrafluoroethylene, poly(1,1-difluoroethylene), polyethylene, polypropylene, polyacrylic acid (PAA), styrene-butadiene rubber, acrylic (acrylated) styrene-butadiene rubber, epoxy resin, or nylon.

In some embodiments, the negative electrode may further include a conductive agent. The conductive agent includes but is not limited to a carbon-based material, a metal-based material, a conductive polymer, or a mixture thereof. In some embodiments, the carbon-based material is selected from conductive carbon black, acetylene black, Ketjen black, carbon fibers, or any combination thereof.

In some embodiments, the negative electrode current collector includes but is not limited to copper foil, nickel foil, stainless steel foil, titanium foil, foamed nickel, foamed copper, a polymer substrate coated with conductive metal, and any combination thereof.

In some embodiments, the separator includes but is not limited to at least one of polyethylene, polypropylene, polyethylene terephthalate, polyimide, or aramid. For example, polyethylene includes at least one composition selected from high-density polyethylene, low-density polyethylene, or ultra-high-molecular-weight polyethylene. Especially, polyethylene and polypropylene have a good effect on preventing short circuit and can improve the safety of lithium-ion batteries by virtue of a turn-off effect.

In some embodiments, the electrolyte includes a lithium salt and a non-aqueous solvent.

In some embodiments, the lithium salt may be selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, $LiPF_6$ is used as the lithium salt because it can provide a high ionic conductivity and improve the cycling performance.

In some embodiments, the non-aqueous solvent may be a carbonate compound, a carboxylate compound, an ether compound, another organic solvent, or a combination thereof.

In some embodiments, the carbonate compound may be a linear carbonate compound, a cyclic carbonate compound, a fluorocarbonate compound, or a combination thereof.

In some embodiments, an example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. An example of the cyclic carbonate compound is ethylene carbonate (EC), propyl carbonate (PC), butyl carbonate (BC), vinyl ethyl carbonate (VEC), or a combination thereof. An example of the fluorocarbonate compound is fluoroethyl carbonate (FEC), 1,2-difluoroethyl carbonate, 1,1-difluoroethyl carbonate, 1,1,2-trifluoroethyl carbonate, 1,1,2,2-tetrafluoroethyl carbonate, 1-fluoro-2-methyl-ethyl carbonate, 1-fluoro-1-methyl-ethyl carbonate, 1,2-difluoro-1-methyl-ethyl carbonate, 1,1,2-trifluoro-2-methyl-ethyl carbonate, trifluoromethyl-ethyl carbonate, or a combination thereof.

In some embodiments, an example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof. In some embodiments, an example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

In some embodiments, an example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

The electrochemical apparatus in this application is not particularly limited to any purpose, and may be used for any known purpose in the prior art. In one embodiment, an electronic apparatus including the electrochemical apparatus in this application includes but is not limited to notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, power tools, drones, handheld vacuum cleaners, bicycles, lighting appliances, toys, game machines, clocks, electric tools, flash lamps, cameras, large household batteries, and lithium-ion capacitors.

The following describes this application by taking lithium-ion batteries as an example with reference to specific embodiments. Persons skilled in the art understand that these embodiments are merely intended to illustrate this application rather than to limit the scope of this application.

**I. Preparation of lithium-ion battery**

**Example 1**

1. Preparation method of positive electrode material

(1) Nickel sulfate, cobalt sulfate, and manganese sulfate were mixed and added to deionized water to prepare a salt mixture solution; sodium hydroxide was added to deionized water to prepare an alkaline solution; ammonia water was used as a complexing agent; subsequently, the salt solution, the alkaline solution, and the complexing agent were added to a reactor; and an aluminum sulfate solution and a titanium sulfate solution were added for reaction. A reaction temperature was controlled to be 25°C, and PH was controlled to be 11. When the particle size Dv50 reached a predetermined value of 4.5 $\mu$m, a reactive slurry was filtered, washed, and dried to obtain a precursor. During coprecipitation reaction of the precursor, the aluminum sulfate solution and the titanium sulfate solution were added, and a doping element was uniformly dispersed in a precursor matrix, where a molar ratio of Ni/Co/Mn/Al/Ti in doped hydroxide precursor composition in this example was 0.5:0.02:0.465:0.01:0.005.

(2) A lithium source $Li_2CO_3$ and the doped hydroxide precursor were mixed at a molar ratio 1.05:1 of Li/M (M = Ni + Co + Mn + Al + Ti) and then put into a high-speed mixer. Excessive lithium partly volatilized during high-temperature sintering; after mixed to uniformity at a high speed, a resulting mixed material was added to a saggar; the saggar was put into a furnace, first slowly heated up to a primary sintering temperature of 960°C in an oxygen atmosphere for pre-sintering, and then calcined for 12 h in the oxygen atmosphere at the primary sintering temperature of 960°C to obtain a primary sintered material; and the obtained primary sintered material was cooled and then mechanically crushed, fluid-energy milled, and classified, where during cooling, oxygen atmosphere was still introduced, and the material was slowly cooled at a cooling rate of 10 °C/min.

(3) The primary sintered material processed and coating additives nano $Co(OH)_2$ and $Al_2O_3$ were mixed at a mass ratio of 100:5.8:2.1, then mixed to uniformity in the high-speed mixer, and put into a saggar; the saggar was put into the furnace and calcined for 6 h in an oxygen atmosphere; air with no $CO_2$ was introduced to the furnace for quickly cooling the material at a cooling rate of 20 °C/min; due to the coaction of the quick cooling manner and the coating additives, a surface layer of the material had a phase change to form a first region having a spinel phase structure and a second region having a rock-salt phase structure, where the first region had a thickness of 2 nm, and the second region had a thickness of 2 nm; the obtained material was subjected to mechanical pulverization, demagnetization, sieving, and packaging to obtain a positive electrode material, where a matrix of the positive electrode material is $LiNi_{0.5}Co_{0.02}Mn_{0.465}Al_{0.01}Ti_{0.005}O_2$; based on a molar content of metal elements other than Li in the first coating layer, a molar percentage of element Co in the first coating layer is 8.0%, and a molar percentage of element A (Al and Ti) in the first coating layer is 5.0%; and the first coating layer had a thickness of 8 nm, W1 = 4W2, and T1 = 3.3T2.

2. Preparation of positive electrode plate

The positive electrode material prepared, conductive agents acetylene black and carbon nanotubes, and a binder polyvinylidene fluoride were mixed at a mass ratio of 96:1.2:0.8:2, N-methylpyrrolidone was added, and the materials were stirred to uniformity under the action of a vacuum mixer to obtain a positive electrode slurry, where a solid content of the positive electrode slurry was 70%. The positive slurry was uniformly applied on a surface of a positive electrode current collector aluminum foil, and the aluminum foil was dried under 120°C for 1 h to obtain a positive electrode plate with one surface coated with a positive electrode material layer. The foregoing steps were repeated on the other surface of the aluminum foil to obtain a positive electrode plate with both surfaces coated with the positive electrode material layer. Subsequently, cold pressing, cutting, and slitting were performed to obtain a positive electrode plate.

3. Preparation of negative electrode plate

A negative electrode active material artificial graphite, a binder styrene-butadiene rubber, and a thickening agent sodium carboxymethylcellulose were mixed at a mass ratio of 97.4:1.2:1.4, deionized water was added, and the resulting solution was stirred to uniformity under the action of a vacuum mixer to obtain a negative electrode slurry with a solid content of 75%. The negative electrode slurry was uniformly applied on a surface of a negative electrode current collector copper foil, and the copper foil was dried under 120°C to obtain a negative electrode plate with one surface coated with a negative electrode material layer. The foregoing steps were repeated on the other surface of the copper foil to obtain a negative electrode plate with both surfaces coated with the negative electrode material layer. Subsequently, cold pressing, cutting, and slitting were performed to obtain a negative electrode plate.

4. Preparation of electrolyte

In a dry argon atmosphere glove box, propylene carbonate, ethylene carbonate, and diethyl carbonate were mixed at a mass ratio of 1:1:1 to obtain an organic solvent, and then lithium salt $LiPF_6$ was dissolved in the organic solvent and mixed to uniformity to obtain an electrolyte. A mass percentage of $LiPF_6$ in the electrolyte is 12.5%.

5. Preparation of separator

A porous polyethylene film with a thickness of 7 $\mu$m was used.

6. Preparation of lithium-ion battery

The prepared positive electrode plate, separator and negative electrode plate were sequentially stacked so that the separator was located between the positive electrode plate and the negative electrode plate to provide separation. Then winding was performed to obtain an electrode assembly. The electrode assembly was placed into an aluminum-plastic film packaging bag and dried, and then electrolyte was injected, followed by processes such as vacuum packaging, standing, formation, degassing, and trimming to obtain a lithium-ion battery.

### Example 2

Example 2 differs from example 1 only in the following aspects of the preparation steps of the positive electrode material:
The molar ratio of Ni/Co/Mn/Al/Ti in the doped hydroxide precursor composition in the step (1) was 0.5:0.1:0.385:0.01:0.005.
The primary sintering temperature in the step (2) was 945°C.
In the step (3), the matrix of the positive electrode material was $LiNi_{0.5}Co_{0.1}Mn_{0.385}Al_{0.01}Ti_{0.005}O_2$; the mass ratio of the primary sintered material and the coating additives nano $Co(OH)_2$ and $Al_2O_3$ was 100:29.1:2.1; the molar percentage W1 of element Co in the first coating layer was 40.0%; and the molar percentage W2 of element Co in the matrix was 10%.

### Example 3

Example 3 differs from example 1 only in the following aspects of the preparation steps of the positive electrode material:
The molar ratio of Ni/Co/Mn/Al/Ti in the doped hydroxide precursor composition in the step (1) was 0.6:0.1:0.285:0.01:0.005.
The primary sintering temperature in the step (2) was 935°C.
In the step (3), the matrix of the positive electrode material was $LiNi_{0.6}Co_{0.1}Mn_{0.285}Al_{0.01}Ti_{0.005}O_2$; the mass ratio of the primary sintered material and the coating additives nano $Co(OH)_2$ and $Al_2O_3$ was 100:29.0:2.1; the molar percentage W1 of element Co in the first coating layer was 40.0%; and the molar percentage W2 of element Co in the matrix was 10.0%.

### Example 4

Example 4 differs from example 1 only in the following aspects of the preparation steps of the positive electrode material:
The molar ratio of Ni/Co/Mn/Al/Ti in the doped hydroxide precursor composition in the step (1) was 0.82:0.12:0.045:0.01:0.005.
The primary sintering temperature in the step (2) was 840°C.
In the step (3), the matrix of the positive electrode material was $LiNi_{0.82}Co_{0.12}Mn_{0.045}Al_{0.01}Ti_{0.005}O_2$; the mass

ratio of the primary sintered material and the coating additives nano $Co(OH)_2$ and $Al_2O_3$ was 100:34.4:2.1; the molar percentage W1 of element Co in the first coating layer was 48.0%; and the molar percentage W2 of element Co in the matrix was 12.0%.

## Example 5

Example 5 differs from example 1 only in the following aspect of the preparation steps of the positive electrode material:
The coating additives in the step (3) further contained porous nano LiF particles, where a mass percentage of element F added is 0.1 wt% based on a total weight of the mixed material.

## Example 6

Example 6 differs from example 2 only in the following aspect of the preparation steps of the positive electrode material:
The coating additives in the step (3) further contained porous nano LiF particles, where a mass percentage of element F added is 0.1 wt% based on a total weight of the mixed material.

## Example 7

Example 7 differs from example 3 only in the following aspect of the preparation steps of the positive electrode material:
The coating additives in the step (3) further contained porous nano LiF particles, where a mass percentage of element F added is 0.1 wt% based on a total weight of the mixed material.

## Example 8

Example 8 differs from example 4 only in the following aspect of the preparation steps of the positive electrode material:
The coating additives in the step (3) further contained porous nano LiF particles, where a mass percentage of element F added is 0.1 wt% based on a total weight of the mixed material.

## Example 9

Example 9 differs from example 7 only in the following aspects of the preparation steps of the positive electrode material:
The molar ratio of Ni/Co/Mn/Al/Ti in the doped hydroxide precursor composition in the step (1) was 0.88:0.10:0.005:0.01:0.005.
The primary sintering temperature in the step (2) was 820°C.
In the step (3), the matrix of the positive electrode material was $LiNi_{0.88}Co_{0.1}Mn_{0.005}Al_{0.01}Ti_{0.005}O_2$. The mass ratio of the primary sintered material and the coating additives nano $Co(OH)_2$ and $Al_2O_3$ was 100:8.7:2.1.

## Example 10

Example 10 differs from example 8 only in the following aspects of the preparation steps of the positive electrode material:
The molar ratio of Ni/Co/Mn/Al/Ti in the doped hydroxide precursor composition in the step (1) was 0.90:0.06:0.025:0.01:0.005.
The primary sintering temperature in the step (2) was 810°C.
In the step (3), the matrix of the positive electrode material was $LiNi_{0.90}Co_{0.06}Mn_{0.025}Al_{0.01}Ti_{0.005}O_2$; the mass ratio of the primary sintered material and the coating additives nano $Co(OH)_2$ and $Al_2O_3$ was 100:17.2:2.1; the molar percentage W1 of element Co in the first coating layer was 24%; and the molar percentage W2 of element Co in the matrix was 6%.

## Example 11

Example 11 differs from example 5 only in the following aspect of the preparation steps of the positive electrode material:

In the step (3), the mass ratio of the primary sintered material and the coating additives nano $Co(OH)_2$ and $Al_2O_3$ was 100:17.5:2.1; the molar percentage W1 of element Co in the first coating layer was 20%, where W1 = 10W2; and a thickness of the first coating layer on the surface was 20 nm.

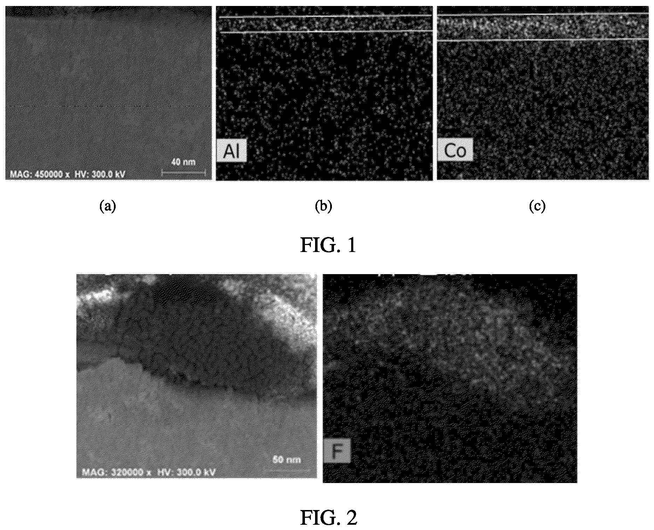

FIG. 1 shows a transmission electron microscope picture and an EDS mapping picture of the positive electrode material prepared in example 11, and the first coating layer on the matrix surface can be observed from FIG. 1. It can be observed in FIG. 2 that the surface of the first coating layer was coated with a nano porous second coating layer containing element F.

## Example 12

Example 12 differs from example 7 only in the following aspect of the preparation steps of the positive electrode material: In the step (3), the mass ratio of the primary sintered material and the coating additives nano $Co(OH)_2$ and $Al_2O_3$ was 100:29:0.3, and the molar percentage T1 of element A (Al and Ti) in the first coating layer was 2.0%, where T1 = 1.3T2.

## Example 13

Example 13 differs from example 7 only in the following aspects of the preparation steps of the positive electrode material:

The molar ratio of Ni/Co/Mn/Al/Ti in the doped hydroxide precursor composition in the step (1) was 0.60:0.10:0.265:0.03:0.005.

In the step (3), the matrix of the positive electrode material was $LiNi_{0.6}Co_{0.1}Mn_{0.265}Al_{0.03}Ti_{0.005}O_2$; the mass ratio of the primary sintered material and the coating additives nano $Co(OH)_2$ and $Al_2O_3$ was 100:29.1:2.4; the molar percentage T1 of element A (Al and Ti) in the first coating layer was 5%; and the molar percentage T2 of element A (Al and Ti) in the matrix was 3.5%, where T1 = 1.4T2.

## Example 14

Example 14 differs from example 13 only in the following aspect of the preparation steps of the positive electrode material:

In the step (3), the mass ratio of the primary sintered material and the coating additives nano $Co(OH)_2$ and $Al_2O_3$ was 100:29.1:6.4; the molar percentage T1 of element A (Al and Ti) in the first coating layer was 15%; and the molar percentage T2 of element A (Al and Ti) in the matrix was 3.5%, where T1 = 4.3T2.

## Example 15

Example 15 differs from example 7 only in that in the preparation step (3) of the positive electrode material, the further contained coating additive was nonporous nano LiF particles.

## Example 16

Example 16 differs from example 7 only in that in the preparation step (3) of the positive electrode material, the further contained coating additive was porous nano lithium borate.

## Example 17

Example 17 differs from example 7 only in that in the preparation step (3) of the positive electrode material, the further contained coating additive was porous nano lithium silicate.

## Example 18

Example 18 differs from example 7 only in that in the preparation step (3) of the positive electrode material, the further contained coating additive was porous nano lithium phosphate.

## Example 19

Example 19 differs from example 7 only in that in the preparation step (3) of the positive electrode material, the coating additive further contained porous nano LiF particles, where a mass percentage of element F added is 0.15% based on a total weight of the mixed material.

### Example 20

Example 20 differs from example 7 only in that in the preparation step (3) of the positive electrode material, the coating additive further contained porous nano LiF particles, where a mass percentage of element F added is 0.2% based on a total weight of the mixed material.

### Example 21

Example 21 differs from example 7 only in the following aspects of the preparation steps of the positive electrode material:
The molar ratio of Ni/Co/Mn/Zr/Ti in the doped hydroxide precursor composition in the step (1) was 0.60:0.10:0.285:0.01:0.005.
In the step (3), the matrix of the positive electrode material was $LiNi_{0.6}Co_{0.1}Mn_{0.285}Zr_{0.01}Ti_{0.005}O_2$, and the coating additives were nano $Co(OH)_2$ and $ZrO_2$. The mass ratio of the primary sintered material and the coating additives nano $Co(OH)_2$ and $ZrO_2$ was 100:28.8:4.4, and element A in the first coating layer included Zr and Ti.

### Example 22

Example 22 differs from example 7 only in the following aspects of the preparation steps of the positive electrode material:
The molar ratio of Ni/Co/Mn/Y/Ti in the doped hydroxide precursor composition in the step (1) was 0.60:0.10:0.285:0.01:0.005.
In the step (3), the matrix of the positive electrode material was $LiNi_{0.6}Co_{0.1}Mn_{0.285}Y_{0.01}Ti_{0.005}O_2$, and the coating additives were nano $Co(OH)_2$ and $Y_2O_3$. The mass ratio of the primary sintered material and the coating additives nano $Co(OH)_2$ and $Y_2O_3$ was 100:28.8:4.7, and element A in the first coating layer included Y and Ti.

### Example 23

Example 23 differs from example 8 only in the following aspects of the preparation steps of the positive electrode material:
The molar ratio of Ni/Co/Mn/W/Ti in the doped hydroxide precursor composition in the step (1) was 0.60:0.10:0.285:0.01:0.005.
In the step (3), the matrix of the positive electrode material was $LiNi_{0.6}Co_{0.1}Mn_{0.285}W_{0.01}Ti_{0.005}O_2$, and the coating additives were nano $Co(OH)_2$ and $WO_3$. The mass ratio of the primary sintered material and the coating additives nano $Co(OH)_2$ and $WO_3$ was 100:28.5:9.5, and element A in the first coating layer included W and Ti.

### Comparative example 1

Comparative example 1 differs from example 3 only in that the step (3) was omitted in preparation of the positive electrode material, and that the surface of the material included no first region having a spinel phase structure and no second region having a rock-salt phase structure.

### Comparative example 2

Comparative example 2 differs from example 3 only in that: In the preparation step (3) of the positive electrode material, after secondary sintering was completed, dry air containing no $CO_2$ was introduced for quick cooling at a cooling rate of 10 °C/min, the cooling time was doubled in comparison with that in example 3, and the first coating layer of the positive electrode material had only a spinel phase.

### Comparative Example 3

Comparative example 3 differs from example 3 only in that: In the preparation step (3) of the positive electrode material, after secondary sintering was completed, dry air containing $CO_2$ was introduced for quick cooling at a cooling rate of 40 °C/min, the surface of the material reacted with $CO_2$ to generate a rock-salt phase, and the first coating layer had only a rock-salt phase.

**II. Test method**

1. Test for capacity retention rate after high-temperature cycling

First, a lithium-ion battery was subjected to the first charge and discharge in an environment at 45°C, where the battery was charged at a constant charge current of 1.5C until an upper limit voltage was 4.35 V and then discharged at a constant discharge current of 4C until a final voltage was 2.8 V, and a discharge capacity of the first cycle was recorded. Subsequently, 800 charge and discharge cycles were performed, and a discharge capacity of the 800th cycle was recorded.

Cycling capacity retention rate = (discharge capacity of the 800th cycle/discharge capacity of the 1st cycle) $\times$ 100%

2. Low-temperature valley voltage test

Test steps in an environment at 25°C include: (1) The battery was left standing for 30 min; (2) the battery was charged to 4.25 V at a constant current of 1.5C and then charged to 0.05C at a constant voltage; (3) the battery was left standing for 5 minutes; (4) the battery was discharged to 2.8 V at a constant current of 0.5C; (5) temperature of the furnace was regulated to 25°C; (6) the battery was left standing for 120 minutes; (7) the battery was charged to 4.25 V at a constant current of 1.5C and then charged to 0.05C at a constant voltage; (8) the temperature of the furnace was regulated to -10°C; (9) the battery was left standing for 120 minutes; (10) the battery was discharged to 2.8 V at a constant current of 6C; and (11) the battery was left standing for 5 minutes.
The discharge capacity at 0.5C at 25°C was taken as a standard. Thermal insulation cotton was used to wrap the battery in discharge tests at different temperatures and rates.
During a discharge test at 6C at -10°C, due to influences of electrochemical polarization and concentration polarization, voltage decreased quickly in the initial phase of discharge, and then the discharge voltage rebounded due to an increase of temperature rise, where a value of the discharge voltage that decreased to a lowest point in the initial phase of discharge was a low-temperature valley voltage.

3. Discharge temperature rise test

Test steps in an environment at 25°C include: (1) The battery was left standing for 120 minutes; (2) the battery was discharged to 2.8 V at a constant current of 0.5C; (3) the battery was left standing for 120 minutes; (4) the battery was charged to 4.25 V at a constant current of 1.5C and then charged to 0.05C at a constant voltage; (5) the battery was left standing for 120 minutes; (6) the battery was discharged to 2.8 V at a constant current of 4C; and (7) the battery was left standing for 30 minutes.
During a discharge test at 4C, thermal insulation cotton was used to wrap the battery, a multichannel thermometer was used to measure a temperature rise at an intersection point of diagonal lines of the lithium-ion battery, and temperatures were recorded every 5 seconds during the test until the end of the test.

4. Other measurement methods

Thickness measurement

After the positive electrode material was made into a sample using focused ion beams (FIB), EDS mapping was used for determining element enrichment on the surface of the matrix, and thickness of the first coating layer was measured through Digital Micrograph.

Measurement of molar percentage of elements

EDS was used to measure molar percentages of element A and element Co in the first coating layer and the matrix.

Morphology and element type measurement

STEM and EDS were used to determine whether the second coating layer on the surface of the material had pores or not and determine the type of non-metal elements contained.

# EP 4 489 123 A1

Spinel phase and rock-salt phase test

After the positive electrode material was made into a sample using focused ion beams (FIB), STEM was used to test phase compositions in the material matrix and the first coating layer.

## III. Test results

Table 1 lists parameter features of the positive electrode materials prepared according to the examples and comparative examples of this application.

**Table 1**

| | Matrix material | W1 (at%) | T1 (at%) | W2 (at%) | T2 (at%) | Rock-salt phase of first coating layer | Spinel phase of first coating layer | Thickness of first coating layer (nm) | Thickness of first region (nm) | Thickness of second region (nm) | W1/W2 | T1/T2 | Element X in second coating layer | Pores in second coating layer | Mass percentage of element X (ppm) |
|---|---|---|---|---|---|---|---|---|---|---|---|---|---|---|---|
| | | | | | | | | Examples | | | | | | | |
| 1 | $LiNi_{0.5}Co_{0.02}Mn_{0.465}Al_{0.01}Ti_{0.005}O_2$ | 8 | 5 | 2 | 1.5 | Yes | Yes | 8 | 2 | 2 | 4.0 | 3.3 | No | No | 0 |
| 2 | $LiNi_{0.5}Co_{0.1}Mn_{0.385}Al_{0.01}Ti_{0.005}O_2$ | 40 | 5 | 10 | 1.5 | Yes | Yes | 8 | 2 | 2 | 4.0 | 3.3 | No | No | 0 |
| 3 | $LiNi_{0.6}Co_{0.1}Mn_{0.285}Al_{0.01}Ti_{0.005}O_2$ | 40 | 5 | 10 | 1.5 | Yes | Yes | 8 | 2 | 2 | 4.0 | 3.3 | No | No | 0 |
| 4 | $LiNi_{0.82}Co_{0.12}Mn_{0.045}Al_{0.01}Ti_{0.005}O_2$ | 48 | 5 | 12 | 1.5 | Yes | Yes | 8 | 2 | 2 | 4.0 | 3.3 | No | No | 0 |
| 5 | $LiNi_{0.5}Co_{0.02}Mn_{0.465}Al_{0.01}Ti_{0.005}O_2$ | 8 | 5 | 2 | 1.5 | Yes | Yes | 8 | 2 | 2 | 4.0 | 3.3 | F | Yes | 1000 |
| 6 | $LiNi_{0.5}Co_{0.1}Mn_{0.385}Al_{0.01}Ti_{0.005}O_2$ | 40 | 5 | 10 | 1.5 | Yes | Yes | 8 | 2 | 2 | 4.0 | 3.3 | F | Yes | 1000 |
| 7 | $LiNi_{0.6}Co_{0.1}Mn_{0.285}Al_{0.01}Ti_{0.005}O_2$ | 40 | 5 | 10 | 1.5 | Yes | Yes | 8 | 2 | 2 | 4.0 | 3.3 | F | Yes | 1000 |
| 8 | $LiNi_{0.82}Co_{0.12}Mn_{0.045}Al_{0.01}Ti_{0.005}O_2$ | 48 | 5 | 12 | 1.5 | Yes | Yes | 8 | 2 | 2 | 4.0 | 3.3 | F | Yes | 1000 |
| 9 | $LiNi_{0.88}Co_{0.1}Mn_{0.005}Al_{0.01}Ti_{0.005}O_2$ | 15 | 5 | 10 | 1.5 | Yes | Yes | 8 | 2 | 2 | 1.5 | 3.3 | F | Yes | 1000 |
| 10 | $LiNi_{0.90}Co_{0.06}Mn_{0.025}Al_{0.01}Ti_{0.005}O_2$ | 24 | 5 | 6 | 1.5 | Yes | Yes | 8 | 2 | 2 | 4.0 | 3.3 | F | Yes | 1000 |
| 11 | $LiNi_{0.5}Co_{0.02}Mn_{0.465}Al_{0.01}Ti_{0.005}O_2$ | 20 | 5 | 2 | 1.5 | Yes | Yes | 20 | 2 | 2 | 10 | 3.3 | F | Yes | 1000 |
| 12 | $LiNi_{0.6}Co_{0.1}Mn_{0.285}Al_{0.01}Ti_{0.005}O_2$ | 40 | 2 | 10 | 1.5 | Yes | Yes | 8 | 4.5 | 1 | 4.0 | 1.3 | F | Yes | 1000 |
| 13 | $LiNi_{0.6}Co_{0.1}Mn_{0.265}Al_{0.03}Ti_{0.005}O_2$ | 40 | 5 | 10 | 3.5 | Yes | Yes | 8 | 3 | 2.5 | 4.0 | 1.4 | F | Yes | 1000 |
| 14 | $LiNi_{0.6}Co_{0.1}Mn_{0.265}Al_{0.03}Ti_{0.005}O_2$ | 40 | 15 | 10 | 3.5 | Yes | Yes | 8 | 1 | 5 | 4.0 | 4.3 | F | Yes | 1000 |
| 15 | $LiNi_{0.6}Co_{0.1}Mn_{0.285}Al_{0.01}Ti_{0.005}O_2$ | 40 | 5 | 10 | 1.5 | Yes | Yes | 8 | 2 | 2 | 4.0 | 3.3 | F | No | 1000 |
| 16 | $LiNi_{0.6}Co_{0.1}Mn_{0.285}Al_{0.01}Ti_{0.005}O_2$ | 40 | 5 | 10 | 1.5 | Yes | Yes | 8 | 2 | 2 | 4.0 | 3.3 | B | Yes | 1000 |

| | Matrix material | W1 (at%) | T1 (at%) | W2 (at%) | T2 (at%) | Rock-salt phase of first coating layer | Spinel phase of first coating layer | Thickness of first coating layer (nm) | Thickness of first region (nm) | Thickness of second region (nm) | W1/W2 | T1/T2 | Element X in second coating layer | Pores in second coating layer | Mass percentage of element X (ppm) |
|---|---|---|---|---|---|---|---|---|---|---|---|---|---|---|---|
| 17 | $LiNi_{0.6}Co_{0.1}Mn_{0.285}Al_{0.01}Ti_{0.005}O_2$ | 40 | 5 | 10 | 1.5 | Yes | Yes | 8 | 2 | 2 | 4.0 | 3.3 | Si | Yes | 1000 |
| 18 | $LiNi_{0.6}Co_{0.1}Mn_{0.285}Al_{0.01}Ti_{0.005}O_2$ | 40 | 5 | 10 | 1.5 | Yes | Yes | 8 | 2 | 2 | 4.0 | 3.3 | P | Yes | 1000 |
| 19 | $LiNi_{0.6}Co_{0.1}Mn_{0.285}Al_{0.01}Ti_{0.005}O_2$ | 40 | 5 | 10 | 1.5 | Yes | Yes | 8 | 2 | 2 | 4.0 | 3.3 | F | Yes | 1500 |
| 20 | $LiNi_{0.6}Co_{0.1}Mn_{0.285}Al_{0.01}Ti_{0.005}O_2$ | 40 | 5 | 10 | 1.5 | Yes | Yes | 8 | 2 | 2 | 4.0 | 3.3 | F | Yes | 2000 |
| 21 | $LiNi_{0.6}Co_{0.1}Mn_{0.285}Zr_{0.01}Ti_{0.005}O_2$ | 40 | 5 | 10 | 1.5 | Yes | Yes | 8 | 2 | 2 | 4.0 | 3.3 | F | Yes | 1000 |
| 22 | $LiNi_{0.6}Co_{0.1}Mn_{0.285}Y_{0.01}Ti_{0.005}O_2$ | 40 | 5 | 10 | 1.5 | Yes | Yes | 8 | 2 | 2 | 4.0 | 3.3 | F | Yes | 1000 |
| 23 | $LiNi_{0.6}Co_{0.1}Mn_{0.285}W_{0.01}Ti_{0.005}O_2$ | 40 | 5 | 10 | 1.5 | Yes | Yes | 8 | 2 | 2 | 4.0 | 3.3 | F | Yes | 1000 |
| Comparative examples | | | | | | | | | | | | | | | |
| 1 | $LiNi_{0.6}Co_{0.1}Mn_{0.285}Al_{0.01}Ti_{0.005}O_2$ | 10 | 1.5 | 10 | 1.5 | No | No | 0 | 0 | 0 | 1.0 | 1.0 | No | No | No |
| 2 | $LiNi_{0.6}Co_{0.1}Mn_{0.285}Al_{0.01}Ti_{0.005}O_2$ | 40 | 5 | 10 | 1.5 | No | Yes | 8 | 5.5 | / | 4.0 | 3.3 | No | No | No |
| 3 | $LiNi_{0.6}Co_{0.1}Mn_{0.285}Al_{0.01}Ti_{0.005}O_2$ | 40 | 5 | 10 | 1.5 | Yes | No | 8 | / | 6 | 4.0 | 3.3 | No | No | No |

Note: W1 represents a molar percentage of element Co in the first coating layer based on a molar content of metal elements other than Li in the first coating layer; W2 represents a molar percentage of element Co in the matrix based on a molar content of metal elements other than Li in the matrix; T1 represents a molar percentage of element A in the first coating layer based on the molar content of metal elements other than Li in the first coating layer; and T2 represents a molar percentage of element A in the matrix based on the molar content of metal elements other than Li in the matrix.

**Table 2**

| | Low-temperature valley voltage in discharge at 6C at -10°C (V) | Discharge temperature rise at 4C (°C) | Capacity retention rate after 800 cycles at 45°C |
|---|---|---|---|
| Examples | | | |
| 1 | 3.09 | 35.10 | 88.0% |
| 2 | 3.27 | 33.30 | 87.2% |
| 3 | 3.28 | 33.00 | 84.00% |
| 4 | 3.31 | 32.50 | 78.0% |
| 5 | 3.05 | 36.10 | 92.3% |
| 6 | 3.26 | 33.50 | 91.8% |
| 7 | 3.25 | 33.40 | 90.8% |
| 8 | 3.28 | 32.50 | 85.0% |
| 9 | 3.22 | 32.80 | 72.3% |
| 10 | 3.12 | 34.40 | 68.9% |
| 11 | 3.18 | 34.80 | 91.8% |
| 12 | 3.32 | 32.50 | 85.0% |
| 13 | 3.28 | 32.80 | 89.9% |
| 14 | 3.27 | 33.10 | 92.5% |
| 15 | 3.15 | 34.80 | 89.0% |
| 16 | 3.28 | 33.30 | 89.4% |
| 17 | 3.26 | 33.50 | 89.1% |
| 18 | 3.27 | 33.40 | 89.2% |
| 19 | 3.25 | 33.80 | 91.20% |

(continued)

|  | Low-temperature valley voltage in discharge at 6C at -10°C (V) | Discharge temperature rise at 4C (°C) | Capacity retention rate after 800 cycles at 45°C |
|---|---|---|---|
| Examples | | | |
| 20 | 3.10 | 34.60 | 92.10% |
| 21 | 3.25 | 33.40 | 88.20% |
| 22 | 3.25 | 33.40 | 91.20% |
| 23 | 3.25 | 33.40 | 87.20% |
| Comparative examples | | | |
| 1 | 3.24 | 34.00 | 56.00% |
| 2 | 3.19 | 35.50 | 65.00% |
| 3 | 3.05 | 37.10 | 62.00% |

**IV. Technical effects achieved by this application**

Influence of whether surface of matrix of positive electrode material has first coating layer on performance

In this application, example 3 differs from comparative examples 1 to 3 only in that the surface of the matrix is provided with the first coating layer having both a spinel phase and a rock-salt phase. It can be seen from test results in Table 2 that as compared with comparative example 1, the positive electrode material in example 3 includes a Co-rich first coating layer and therefore has significantly improved kinetic performance, with a high low-temperature discharge valley voltage and a low temperature rise during high-rate discharge. As compared with comparative examples 2 and 3, when the spinel phase and the rock-salt phase are both present in the first coating layer (in example 3), the capacity retention rate after high-temperature cycling of the battery can be significantly improved. This is because: when only the rock-salt phase is present, an initial interface impedance is larger and polarization gradually increases during cycling, leading to continuous degradation of the cycling performance; when only the spinel phase is present, the interface stability is undesirable, leading to rapid rise of the interface impedance as well as rapid degradation of the cycling performance during cycling; and when both the spinel phase and the rock-salt phase are present, an inert coating layer is formed on the surface to inhibit interface side reactions with appropriate interface impedance and relatively small and stable polarization during cycling, thereby improving the high-temperature cycling performance of the lithium-ion battery.

Influence of whether surface of matrix of positive electrode material has second coating layer containing element X on performance

No second coating layer containing element X is present in examples 1 to 4, while, the second coating layer containing element F is present in examples 5 to 8. It can be seen from the data in Table 2 that under a condition that the second coating layer is present, the capacity retention rate after high-temperature cycling of the lithium-ion battery is significantly improved.

Influence of ratio of W1/W2 in positive electrode material on performance

Test results of example 5 and example 11 show that enrichment of Co in the first coating layer can further improve the kinetic performance of the material, increase the low-temperature valley voltage, and reduce the discharge temperature rise.

Influence of element A in first coating layer on performance

Test results of examples 7, 12, 13 and 14 show that percentage of element A in the first coating layer of the positive electrode material has influence on the kinetic performance and cycling retention rate of the material; an increase in percentage of element A in the first coating layer (*T1 gradually increases in examples 12, 13, 7, and 14)* improves the cycling capacity retention rate. This is mainly because the increase in percentage of element A in the first coating layer improves surface oxygen stability.

Influence of whether second coating layer has porous structure on performance

Test results of example 7 and example 15 show that provision of a porous structure in the second coating layer is conducive to performance of the material, where the porous structure being present in the second coating layer facilitates infiltration of the electrolyte and intercalation and deintercalation of lithium ions, thereby alleviating polarization and improving the kinetic performance and cycling performance of the material.

Influence of type and percentage of element X in second coating layer on performance

In examples 7 and 16 to 20, influences of different types and percentages of element X on the performance of the material are illustrated. When F with high-electronegativity is used as element X in the second coating layer, due to high electronegativity and high electron adsorption capability of F, the surface structure of the material can be stabilized, and interface side reactions can be reduced. In examples 7 and 16 to 18, different types of element X are contained. It can be seen from the test results that the use of element F for coating achieves the best effect in improving the cycling stability. It can be seen from examples 7, 19 and 20 that with an increase in percentage of element F, the cycling performance is further improved.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Accordingly, descriptions appearing in the specification, such as "in some embodiments", "in the embodiments", "in an embodiment", "in another example", "in an example", "in a particular example", or "for example", are not necessarily references to the same embodiments or examples in the application. In addition, specific features, structures, materials, or characteristics herein may be incorporated in any suitable manner into one or more embodiments or examples.

Although illustrative embodiments have been demonstrated and described, those skilled in the art should understand that the above embodiments shall not be construed as limitations on the application, and that the embodiments may be changed, replaced, and modified without departing from the spirit, principle, and scope of the application.

**Claims**

1. A positive electrode material, comprising: a matrix and a first coating layer located on surface of the matrix, wherein based on a molar content of metal elements other than Li in the first coating layer, a molar percentage of element Co in the first coating layer is W1, and based on a molar content of metal elements other than Li in the matrix, a molar percentage of element Co in the matrix is W2, satisfying: W1 > W2; and the first coating layer comprises a first region having a spinel phase structure.

2. The positive electrode material according to claim 1, wherein the first coating layer further comprises a second region having a rock-salt phase structure.

3. The positive electrode material according to claim 1, wherein at least one of the following conditions is satisfied:

   (i)

   $$W1 \geq 1.5W2;$$

   (ii)

   $$W1 \leq 10W2;$$

   (iii) W1 ranges from 8% to 48%;
   (iv) the first coating layer has a thickness ranging from 3 nm to 40 nm; or
   (v) the first region has a thickness ranging from 1 nm to 5 nm.

4. The positive electrode material according to claim 3, wherein at least one of the following conditions is satisfied:

   (1)

$$W1 \geq 4W2;$$

(2) W1 ranges from 15% to 40%; or
(3) the first coating layer has a thickness ranging from 8 nm to 20 nm.

5. The positive electrode material according to claim 2, wherein at least one of the following conditions is satisfied:

(1) the first region is located between the matrix and the second region; or
(2) the second region has a thickness ranging from 1 nm to 5 nm.

6. The positive electrode material according to claim 1, wherein the matrix and the first coating layer each independently contain element A selected from at least one of Al, Ti, Y, V, Nb, W, Zr, La, Mg, Cr, Ge, Mo, Sr, Ca, Ba, Fe, Cu, Zn, Ga, In, Sn, Ce, Ta, Hf, or Sb; based on the molar content of metal elements other than Li in the first coating layer, a molar percentage of element A in the first coating layer is T1; and based on the molar content of metal elements other than Li in the matrix, a molar percentage of element A in the matrix is T2, satisfying: T1 > T2.

7. The positive electrode material according to claim 6, wherein at least one of the following conditions is satisfied:

(a1)

$$T1 \geq 1.3T2;$$

(a2)

$$T1 \leq 10T2;$$

or
(a3) T1 ranges from 1.5% to 15%.

8. The positive electrode material according to claim 1, wherein the positive electrode material further comprises a second coating layer located on surface of the first coating layer, the second coating layer containing element X, and element X being selected from at least one of F, B, P, or Si.

9. The positive electrode material according to claim 8, wherein at least one of the following conditions is satisfied:

(b1) the second coating layer has a porous structure;
(b2) the second coating layer comprises at least one of lithium fluoride, lithium phosphate, lithium borate, or lithium silicate; or
(b3) based on a molar content of elements other than Li in the second coating layer, a molar percentage of element X in the second coating layer ranges from 0.1% to 10%.

10. The positive electrode material according to claim 1, wherein at least one of the following conditions is satisfied:

(c1) the matrix comprises a lithium-nickel composite oxide having a layered crystal structure;
(c2) the matrix contains element Ni, wherein a molar percentage of element Ni in the matrix is greater than or equal to 50% based on the molar content of metal elements other than Li in the matrix; or
(c3) the matrix contains element Co, wherein a molar percentage of element Co in the matrix is greater than or equal to 2% based on the molar content of metal elements other than Li in the matrix.

11. An electrochemical apparatus, comprising the positive electrode material according to any one of claims 1 to 10.

12. An electronic apparatus, comprising the electrochemical apparatus according to claim 11.

(a)          (b)          (c)

FIG. 1

FIG. 2

FIG. 3

## INTERNATIONAL SEARCH REPORT

| International application No. |
| --- |
| **PCT/CN2023/088329** |

**A.     CLASSIFICATION OF SUBJECT MATTER**

H01M4/52(2010.01)i

According to International Patent Classification (IPC) or to both national classification and IPC

**B.     FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 正极, 基体, 核, 壳, 包覆, 钴, 镍, 铝, battery, cathode, core, substrate, shell, coating, cobalt, nickel, aluminum

**C.     DOCUMENTS CONSIDERED TO BE RELEVANT**

| Category* | Citation of document, with indication, where appropriate, of the relevant passages | Relevant to claim No. |
| --- | --- | --- |
| PX | CN 114784285 A (NINGDE AMPEREX TECHNOLOGY LTD.) 22 July 2022 (2022-07-22) claims 1-12, and description, paragraphs 36-103 | 1-12 |
| X | CN 109428074 A (SAMSUNG ELECTRONICS CO., LTD. et al.) 05 March 2019 (2019-03-05) description, paragraphs 30-112 and 141-192 | 1-7, 10-12 |
| Y | CN 109428074 A (SAMSUNG ELECTRONICS CO., LTD. et al.) 05 March 2019 (2019-03-05) description, paragraphs 30-112 and 141-192 | 8-9 |
| Y | CN 106356507 A (SAMSUNG ELECTRONICS CO., LTD. et al.) 25 January 2017 (2017-01-25) description, paragraphs 33-36 | 8-9 |
| X | CN 109216651 A (SAMSUNG ELECTRONICS CO., LTD. et al.) 15 January 2019 (2019-01-15) description, paragraphs 37-165 | 1-5, 10-12 |

☑ Further documents are listed in the continuation of Box C.       ☑ See patent family annex.

| \* Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 June 2023** | **03 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/088329** |

**C.      DOCUMENTS CONSIDERED TO BE RELEVANT**

| Category* | Citation of document, with indication, where appropriate, of the relevant passages | Relevant to claim No. |
| --- | --- | --- |
| X | CN 108550830 A (HARBIN INSTITUTE OF TECHNOLOGY SHENZHEN GRADUATE SCHOOL) 18 September 2018 (2018-09-18) <br> description, paragraphs 4-21 | 1-5, 10-12 |
| X | CN 107369815 A (PULEAD TECHNOLOGY INDUSTRY CO., LTD.) 21 November 2017 (2017-11-21) <br> description, paragraphs 7-74 | 1-5, 10-12 |
| A | CN 112803022 A (CHINA AUTOMOTIVE BATTERY RESEARCH INSTITUTE CO., LTD.) 14 May 2021 (2021-05-14) <br> entire document | 1-12 |
| A | CN 102237518 A (SHENZHEN BAK BATTERY CO., LTD.) 09 November 2011 (2011-11-09) <br> entire document | 1-12 |

Form PCT/ISA/210 (second sheet) (July 2022)

**INTERNATIONAL SEARCH REPORT**
Information on patent family members

International application No.

**PCT/CN2023/088329**

| Patent document cited in search report | | | Publication date (day/month/year) | Patent family member(s) | | | Publication date (day/month/year) |
|---|---|---|---|---|---|---|---|
| CN | 114784285 | A | 22 July 2022 | None | | | |
| CN | 109428074 | A | 05 March 2019 | US | 2019067689 | A1 | 28 February 2019 |
| | | | | US | 11081693 | B2 | 03 August 2021 |
| | | | | KR | 20190024680 | A | 08 March 2019 |
| | | | | JP | 2019046795 | A | 22 March 2019 |
| | | | | JP | 7228975 | B2 | 27 February 2023 |
| CN | 106356507 | A | 25 January 2017 | US | 2017018767 | A1 | 19 January 2017 |
| | | | | US | 11011746 | B2 | 18 May 2021 |
| | | | | EP | 3118916 | A1 | 18 January 2017 |
| | | | | EP | 3118916 | B1 | 16 October 2019 |
| | | | | KR | 20170008164 | A | 23 January 2017 |
| CN | 109216651 | A | 15 January 2019 | US | 2019006669 | A1 | 03 January 2019 |
| | | | | US | 2023146690 | A1 | 11 May 2023 |
| | | | | KR | 20230030608 | A | 06 March 2023 |
| | | | | KR | 20190003110 | A | 09 January 2019 |
| CN | 108550830 | A | 18 September 2018 | None | | | |
| CN | 107369815 | A | 21 November 2017 | None | | | |
| CN | 112803022 | A | 14 May 2021 | None | | | |
| CN | 102237518 | A | 09 November 2011 | HK | 1163351 | A0 | 07 September 2012 |
| | | | | HK | 1163351 | A1 | 21 October 2016 |

Form PCT/ISA/210 (patent family annex) (July 2022)